# EUROPEAN PATENT SPECIFICATION

(11) **EP 4 435 345 B1**
(45) Date of publication and mention of the grant of the patent: **11.06.2025**
(21) Application number: 24163407.0
(22) Date of filing: 14.03.2024
(51) Int. Cl.: F24S 40/20, H02S 40/10, B08B 1/14, B08B 1/30, B08B 1/34, B08B 1/36, B08B 3/02

(54) **UNMANNED AERIAL VEHICLE PROPELLED AUTONOMOUS MULTIPLANE CLEANING SYSTEM**
DURCH UNBEMANNTES LUFTFAHRZEUG ANGETRIEBENES AUTONOMES MEHREBENENREINIGUNGSSYSTEM
SYSTÈME DE NETTOYAGE MULTIPLANS AUTONOME À PROPULSION PAR VÉHICULE AÉRIEN SANS PILOTE

(30) Priority: 21.03.2023 IN 202321019005
(43) Date of publication of application: 25.09.2024
(73) Proprietor: Tata Consultancy Services Limited, Maharashtra (IN)
(72) Inventor: BHASKARA, MOHAN, 560009 Bangalore, Karnataka (IN); GUNMI, MAHESHA, 560009 Bangalore, Karnataka (IN); DASGUPTA, RANJAN, 700160 Kolkata, West Bengal (IN); UNNIKRISHNAN, BABU, 603103 Chennai, Tamil Nadu (IN); MATHEW, KAVITA SARA, 603103 Tamil, Nadu (IN); SAHA, ARINDAM, 700160 Kolkata, West Bengal (IN); KUMAR, LOKESH, 700160 Kolkata, West Bengal (IN)
(74) Representative: Goddar, Heinz J.

(56) References cited:
- WO-A1-2022/097171
- CN-A- 114 560 085
- CN-A- 115 158 664
- CN-B- 113 060 281
- CN-U- 209 174 516
- CN-U- 213 243 914
- CN-U- 216 468 481
- DE-A1- 102021 112 751
- KR-A- 20230 000 518

## Description

### CROSS-REFERENCE TO RELATED APPLICATIONS AND PRIORITY

The present application claims priority from Indian patent application no. 202321019005, filed on March 21, 2023.

### TECHNICAL FIELD

The disclosure herein generally relates to the field of automated surface cleaning systems, and, more particularly, to Unmanned Aerial Vehicle (UAV) Propelled Autonomous Multiplane Cleaning System (UPAMCS).

### BACKGROUND

Autonomous cleaning is in demand for solar panels with varying installation types including roof top solar paneling and floating solar panels spread over wide areas. Clean solar panels improve the efficiency of power generation. Similarly, developments in building and construction has led to high rise buildings, which mostly are covered with glass panes. Cleaning of these inclined glass panes is a regular task performed during building maintenance. Autonomous cleaning is one of the ideal options for cleaning of the above stated surfaces.

Use of efficient methods for the surface cleaning tasks in terms of time, cost and power consumption is critical in automation approaches. One major reason being the sites of cleaning surfaces are generally remote with challenges faced in easy access to power recharging points. Many a times the sites are at remote places. Thus, on-board battery power must be efficiently used. However, conventional autonomous surface cleaners or solar panel cleaners such as autonomous mobile robots or drones used electrically powered motors for movement of a cleaning apparatus across the surface, as well as for activating the cleaning mechanism. Thus, the existing methods are power consuming systems, affecting time and cost of cleaning. One way to assess cleaning efficiency of the surface cleaners can be in terms of ratio of power consumed to area cleaned. Further, in addition to the power consumption aspect, the construct of the cleaning mechanism is critical. Cleaning systems proposed in the art have technical construct limitations in the cleaning mechanisms used, which lead to a lower ratio of power consumed to area cleaned, directly affecting the cleaning efficiency. Document CN114560085A discloses an unmanned aerial vehicle device and a system for autonomously cleaning and maintaining a solar photovoltaic panel, wherein the device comprises an unmanned aerial vehicle body, a support and a cleaning assembly, the cleaning assembly comprises a base, a scraper blade, a first driving part, a liquid supply device, a plurality of liquid outlet assemblies, a plurality of dust brushing assemblies, a plurality of universal wheel assemblies and a plurality of fixed connecting shafts, the dust brushing assemblies, the universal wheel assemblies and the fixed connecting shafts are arranged in a one-to-one correspondence manner, the first driving part drives the scraper blade to rotate to a state vertical to the base when the scraper blade works, and the first driving part drives the scraper blade to rotate to a state parallel to the base when the scraper blade does not work; the dust removal subassembly cover is established on corresponding fixed connection axle for clean the solar panel upper surface, and the universal wheel subassembly is connected with corresponding fixed connection axle's the other end, and the unmanned aerial vehicle body passes through the universal wheel subassembly and realizes the removal on solar panel. The invention solves the technical problems that the existing unmanned aerial vehicle suspension air cleaning mode consumes a large amount of electric energy, the cleaning force is insufficient, and the requirement on the accuracy of unmanned aerial vehicle height control is high (Abstract). Document CN113060281B discloses a photovoltaic panel cleaning system of a photovoltaic power station, which uses an unmanned aerial vehicle and a cleaning robot, and comprises: workstation, cleaning machines people, unmanned aerial vehicle and photovoltaic board, wherein the workstation includes: the system is provided with an interactive main end, a charging pile and a signal transmitter, wherein the charging pile and the signal transmitter are arranged on the ground, and the charging pile and the signal transmitter are connected with the interactive main end; the photovoltaic panel is arranged on the concrete base through a bracket; cleaning robot links to each other with top unmanned aerial vehicle's unmanned aerial vehicle casing through the main sucking disc that is located the central authorities at robot shell top, and unmanned aerial vehicle carries cleaning robot to move to waiting to wash take off and the descending position on the photovoltaic board. The invention realizes the transfer work of one cleaning robot among a plurality of photovoltaic panels by utilizing the unmanned aerial vehicle, thereby reducing the investment of cleaning equipment. The vacuum pump, the main sucker and the auxiliary sucker are utilized to realize the adsorption and separation of the unmanned aerial vehicle and the cleaning robot; and (4) adsorbing and separating the cleaning robot from the photovoltaic panel (Abstract). Document CN216468481UA1 discloses an unmanned aerial vehicle for cleaning photovoltaic panel, including fixed bolster and photovoltaic board, the photovoltaic board is fixed on the fixed bolster, the top of photovoltaic board is equipped with the unmanned aerial vehicle body, the below of unmanned aerial vehicle body is equipped with support and fixed plate in proper order, the below of fixed plate is equipped with the mobile device, the mobile device passes through fixed plate and support and is connected with unmanned aerial vehicle body fixed, one side of mobile device is equipped with cleans the mechanism, the mobile device is as an organic whole with cleaning the mechanism, unmanned aerial vehicle body starts to drive mobile device and cleans the mechanism and fly, the mobile device starts to drive unmanned aerial vehicle body and cleans the mechanism and move on the photovoltaic board; this novel be used for abluent unmanned aerial vehicle of photovoltaic board can effectually wash the photovoltaic board, not only can be according to the drive of photovoltaic board when wasing, can also change the cleaning object through unmanned aerial vehicle, and overall structure is stable, and the cleaning efficiency is high, is fit for using widely (Abstract). Document CN209174516 U discloses a kind of photovoltaic plant and glass curtain wall cleaning flight dedusters, including aircraft and operation bench, the lower end of aircraft is provided with clearing apparatus, clearing apparatus includes loading plate, the front end of loading plate is provided with video camera, the two sides of loading plate lower end are provided with lifting assembly straight down, the lower end of lifting assembly is hinged with cleaning framework, the lower end for cleaning framework two sides is provided with the oscillating rod type travel switch matched with lifting assembly, it cleans in framework and is provided with cleaning agency, the side for cleaning framework is provided with installing frame, control mechanism is provided in installing frame, wireless transceiver and driving mechanism, operation bench is communicated by wireless transceiver and control mechanism. The utility model passes through the cooperation of aircraft and clearing apparatus, realizes long-range monitoring and cleaning to solar panel, by the cooperation of lifting assembly and oscillating rod type travel switch, it is adapted to the heeling condition of solar panel (Abstract).

### SUMMARY

Embodiments of the present disclosure present technological improvements as solutions to one or more of the above-mentioned technical problems recognized by the inventors in conventional systems. **In** one embodiment, a system, also referred as Unmanned Aerial Vehicle (UAV) Propelled Autonomous Multiplane Cleaning System (UPAMCS), is as defined in the appended claims..

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1A is a three-dimensional (3-D) view of a system, also referred to as an Unmanned Aerial Vehicle (UAV) Propelled Autonomous Multiplane Cleaning System (UPAMCS) in a first mode of operation comprising a single mopping system depicted in a lifting configuration, according to some embodiments of the present disclosure.
FIG. 1B is a three-dimensional (3-D) view of the system (UPAMCS), in a second mode of operation comprising a dual mopping system depicted in a lifting configuration, according to some embodiments of the present disclosure.
FIGS. 2A through 2D depict a structural mechanism of a plurality of components of a base frame of the UPAMCS that transfer forward push from a UAV to drive one or more mopping systems, according to some embodiments of the present disclosure.
FIGS. 2E through 2G depict a mechanism of the mopping system connected to a base frame of the UPAMCS, according to some embodiments of the present disclosure.
FIG. 2H illustrates vision cameras and Light Detection and Ranging (LiDARS) mounted on the base frame for tracking and monitoring landing and movement over surfaces, according to some embodiments of the present disclosure.
FIG. 3A depicts construction of a cleaning fluid distribution network mounted on the base frame for cleaning a flat surface and an inclined surface during a first mode of operation (UPAMCS1), according to some embodiments of the present disclosure.
FIG. 3B depicts construction of the cleaning fluid distribution network mounted on the base frame for cleaning the flat surface and the inclined surface during a second mode of operation (UPAMCS2), according to some embodiments of the present disclosure.
FIG. 4A depicts a normal operating configuration of the first mode (UPAMCS1) and FIG. 4B depicts a steering configuration of the first mode (UPAMCS1), according to some embodiments of the present disclosure.
FIG. 5A depicts the normal operating configuration of the second mode (UPAMCS2) and FIG. 5B depicts the steering configuration of the second mode (UPAMCS2), according to some embodiments of the present disclosure.
FIG. 6 is a schematic depicting inclined surface cleaning mechanism by maintaining the UAV in the lifting configuration, wherein the system moves up and down with cylindrical surface cleaning rollers pressing against the inclined surface, according to some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

Surface cleaning systems demand power, time, and cost efficient approaches. Cleaning systems proposed in the art have technical construct limitations in the cleaning mechanisms used, which leads to a lower ratio of power consumed to area cleaned, directly affecting the cleaning efficiency. Embodiments herein provide a system also referred to as an Unmanned Aerial Vehicle (UAV) Propelled Autonomous Multiplane Cleaning System (UPAMCS) for surface cleaning of flat and inclined surfaces. An UAV and Mopping Interface Mechanism (UAV-MIM) connects a UAV to one or more mopping systems comprising an epicyclic gear system, also referred to as planetary gear system, driven moppers with no additional power devices used. A maneuvering mechanism disclosed enables the UAV to propel the mopping systems to reach any geometric shape or inclination. The UPAMCS provides cost, time, and power efficient surface cleaning. The UPAMCS is also equipped with vision cameras and Light Detection and Ranging (LiDAR) for guidance during landing and crawling over surfaces along with additional surface defect detection by performing image processing on the captured images.

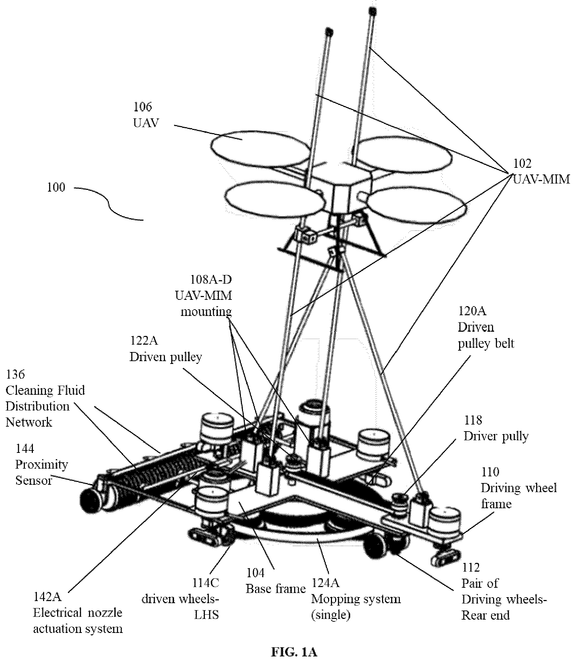

Referring now to the drawings, and more particularly to FIG. 1A through FIG. 6, where similar reference characters denote corresponding features consistently throughout the figures, there are shown preferred embodiments and these embodiments are described in the context of the following exemplary system and/or method. Reference numerals of one or more components of the UPAMCS as depicted in the FIGS. 1A through 5B are provided in Table 1 below for ease of description:

**Table 1**

| Sl. No | Component with alternative name | Numeral reference |
|---|---|---|
| 1 | System (UAV Propelled Autonomous Multiplane Cleaning System (UPAMCS)) | 100 |
| 2 | UAV-MIM | 102 |
| 3 | Base frame (rear end, front end, Left Hand Side (LHS) and Right Hand Side (RHS) | 104 |
| 4 | UAV | 106 |
| 5 | UAV-MIM mounting | 108A-D |
| 6 | Driving wheel frame | 110 |
| 7 | Pair of Driving wheels- Rear end | 112 |
| 8 | Driven wheels (front end, LHS, RHS) | 114A-C |
| 9 | Worm | 116A |
| 10 | Worm wheel | 116B |
| 11 | Driver Pulley | 118 |
| 12 | Driven pulley belts | 120A-B |
| 13 | Driven pulleys | 122A-B |
| 14 | Mopping system | 124A-B |
| 15 | Set of Drive arms | 126A-B |
| 16 | Sun gear wheel | 128A-B |
| | | |
| 17 | Annular Gear wheel | 130A-B |
| 18 | Set of planet gear wheels | 132A-B |
| 19 | Mopping material | 134 |
| 20 | Cleaning Fluid Distribution Network | 136 |
| 21 | Vision cameras | 138A-D |
| 22 | LiDARS | 140A-D |
| 23 | Electrical nozzle actuation system | 142A-B |
| 24 | Proximity sensors | 144A-B |
| 25 | Cylindrical surface cleaning rollers | 502 |
| 26 | X-type cleaning fluid tanks (elevated with head difference) | 504 |
| 27 | Y-type nozzles (in line with plane of inclined surface to be cleaned) | 506 |
| 28 | Piping network for X-type cleaning fluid tanks | 508 |
| 29 | Piping network for A-type cleaning fluid tanks | 510 |
| 30 | A-type cleaning fluid tanks (at base frame level with head difference) | 512 |
| 32 | B-type nozzles (directed downwards towards flat surface to be cleaned) | 514 |

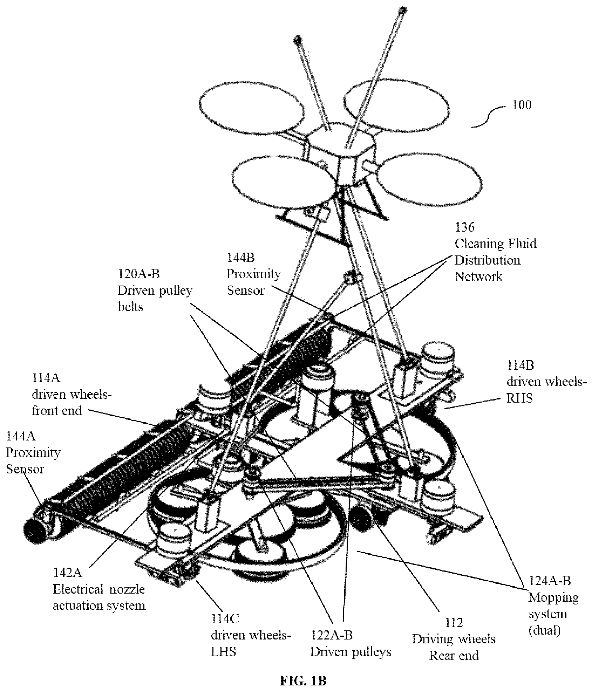

Irrespective of mode of operation, the mechanism for transfer of energy (forward movement) from the UAV to one or more the mopping system is the same and explained below, with specific design changes, to adapt to the two modes. FIG. 1A is a three dimensional (3-D) view of the system 100, also referred to the UPAMCS, in the first mode (UPAMCS1) of operation comprising a single mopping system depicted in a lifting configuration, according to some embodiments of the present disclosure. FIG. 1B is a three dimensional (3-D) view of the system 100 (UPAMCS), in a second mode of operation (UPAMCS2) comprising a dual mopping system depicted in a lifting configuration, according to some embodiments of the present disclosure.

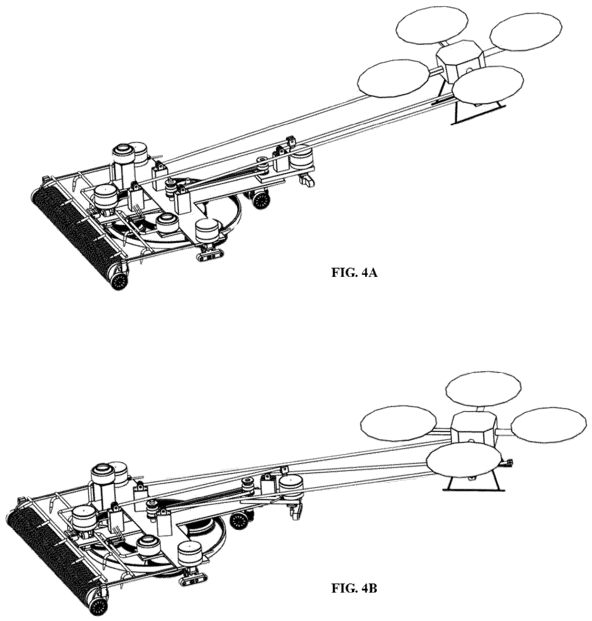

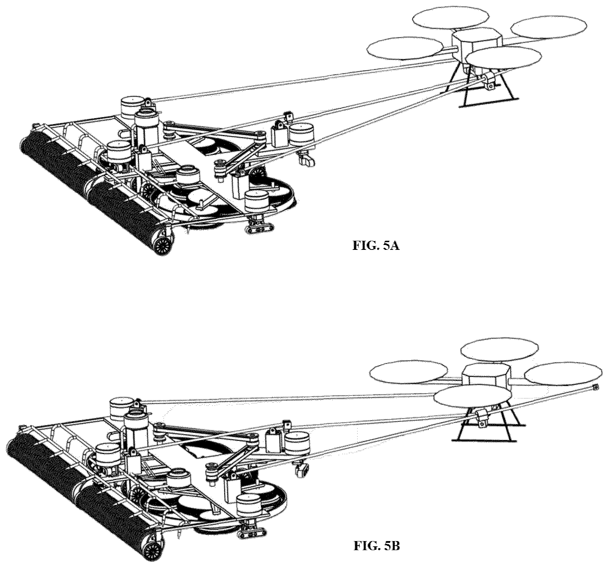

As depicted in FIG. 1A and 1B, the UAV and Mopping Interface Mechanism (UAV-MIM) 102 is mounted on the base frame 104 connecting to the UAV 106 as a slung load making the UPAMCS portable, which can be easily lifted and placed on surface to be cleaned. Thus, the UAV 106, for example a drone, functions as a primary driving system, wherein the UAV lifts the base frame 104 mounted with the mopping systems via the UAV-MIM 102 with the lifting configuration. The UAV 106 depicted in FIGS. 1A through FIG. 6 figure is only for illustration. As understood by person having ordinary skill in the art, an appropriate payload UAV can be selected in accordance with the end user requirements and constraints. The UAV-MIM 102 becomes vertical with the UAV 106 powered for lift off. Once the system 100 reaches the destination (surface to be cleaned), the system 100 lands gently and operating configuration is activated as depicted in FIG. 4A and 5A. It can be understood that lift off, landing, and setting the UAV-MIM 102 into operation mode of interest is controlled via the UAV maneuvering. Thus, once the system 100 lands, the UAV 106 automatically rotates the UAV-MIM 104 to align approximately at 5 degrees to the surface panel horizon. This mechanism enables maximum thrust of the UAV 106 to be used for driving the mopping system 124A-B. The system 100 can be steered by a steering mechanism placed at the driving wheel frame 110. The steering configuration is depicted in 4B and 4C. When the UAV 106 propels forward the pair of driving wheels 112 (at rear end of base frame 104) and the driven wheels 114A-C connected in the front end, the LHS and the RHS of the base frame 104 are moved by friction and the system 100 starts moving in either forward or backward, depending on the push direction of the drone with help of the steering mechanism.

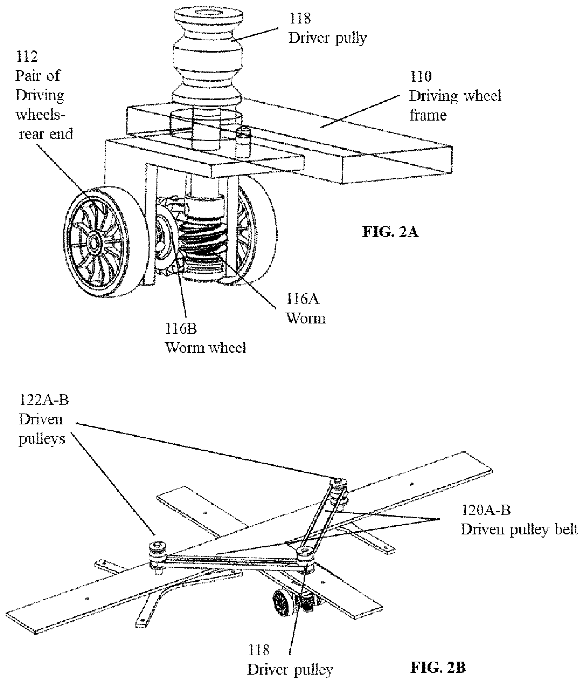

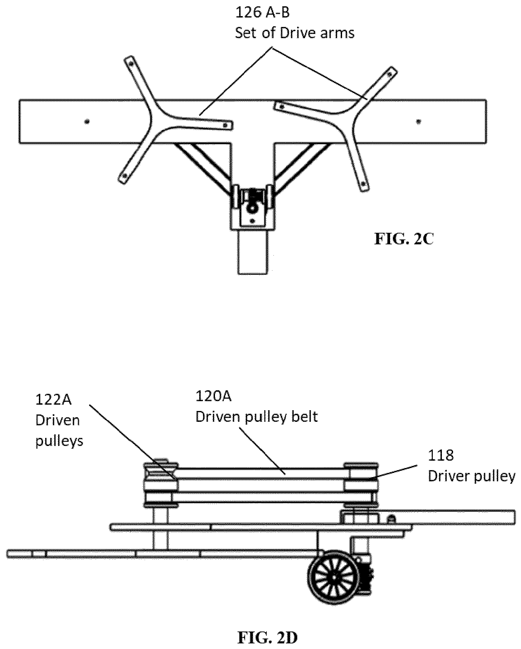

FIGS. 2A through 2D depict structural mechanism of a plurality of components of the base frame 104 that transfer push from the UAV 106 to drive for one or more mopping systems, according to some embodiments of the present disclosure. As depicted in 3D view of FIG. 2A, the driving wheel frame 110 is connected to a rear end of the base frame 104. The pair of driving wheels 112 is attached to a lower side (or bottom side) of the driving wheel frame 110 at the rear end. The worm wheel 116B is attached to a driver wheel axle of the pair of driving wheels 112, which in turn drives the worm 116A about a vertical axis. As depicted in the 3D view of FIG. 2B, the driver pulley 118 fixed at a top end of the worm 116A, wherein one or more driven pulley belts 120A-B transmit drive from the driver pulley 118 to one or more driven pulleys 122A-B further connected to one or more mopping systems 124A-B.

Thus, the system 100 provides two embodiments, the single mopping system and dual mopping system. The choice of mode to be used is dependent on area of the surface of interest. For example, for a smaller area the single mopping system is a preferred choice at it reduces the payload of the UAV 106 to half and hence the cost.

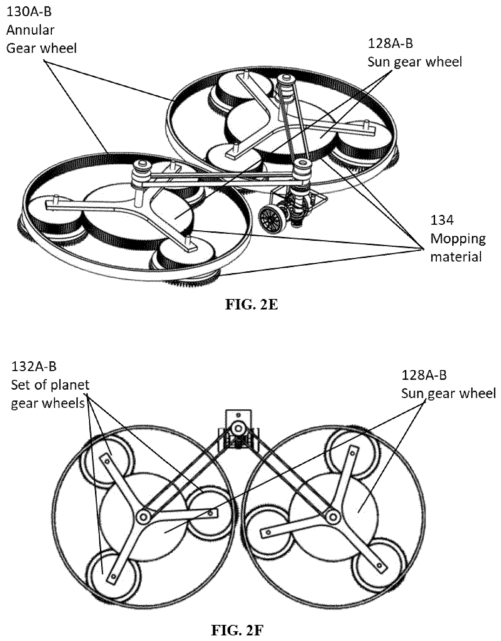

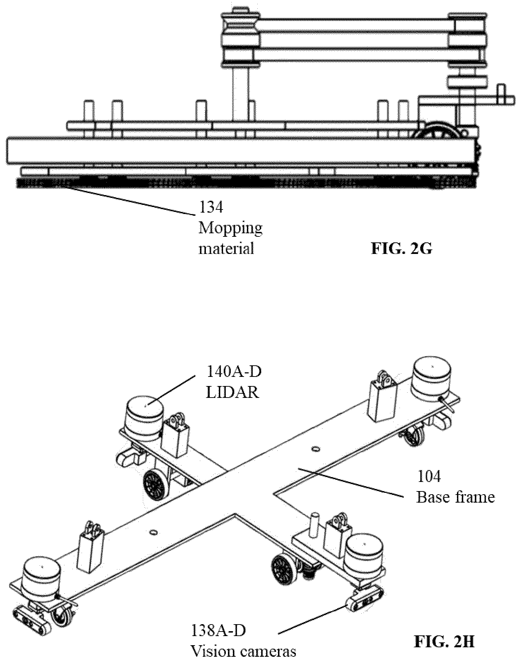

FIGS. 2E through 2G depict the mechanism of the mopping system 124 connected to the base frame 104 of the UPAMCS 100, according to some embodiments of the present disclosure. Each mopping system 124A-B has similar (or identical) mechanism for cleaning. As depicted in the 3D view of FIG. 2E, top view of in FIG. 2F and sideview of FIG. 2G, the mopping system 124 includes the set of drive arms 126A driven by the driven pulley 120A attached further driving an epicyclic or planetary gear system. The planetary gear system comprises an annular gear wheel 130A fixed to the lower side of the base frame 104, a set of planet gear wheels 132A each connected to the drive arm among the set of drive arms 126A. The set of planet gear wheels 132A are meshed between fixed internal teeth of the annular gear wheel 130A and the sun gear wheel 128A, while each of the drive arm rotates the set of planet gear wheels 132A which in turn rotates the sun gear wheel 128A and a mopping material 134 fixed to a bottom side of the sun gear wheel 128A and the set of planet gear wheels 132A.

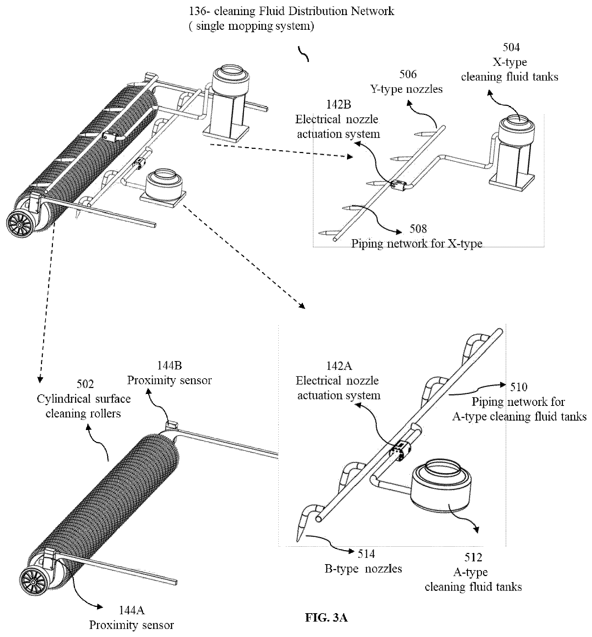

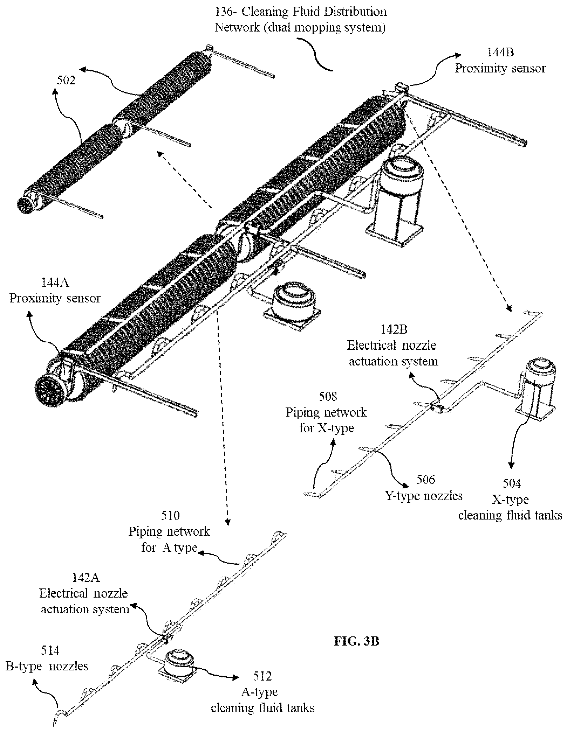

The UPAMCS 100 is equipped with the cleaning fluid distribution network 136 attached to the base frame 104, which can operate differently for to address requirements of cleaning fluid spaying for an inclined surface and a flat surface. Examples of inclined surfaces include vertically mounted (90 degrees) glass panes or angularly mounted glass panes. The UAV 106 with UAV-MIM 102 can easily maneuver the moping systems at any angle with irregular shape surface. Examples of flat surfaces include floating or roof top solar panels and the like. The cleaning fluid distribution network 136 comprises (i) an inclined surface cleaning mechanism for spraying the cleaning fluid in an upward direction, and (ii) a flat surface cleaning mechanism for spraying the cleaning fluid in a downward direction for a surface to be cleaned below the one or more mopping systems 124A-B. FIG. 3A depicts 3-D view of construction of the cleaning fluid distribution network 136 mounted on the base frame 104 for cleaning a flat surface and an inclined surface during the first mode of operation (UPAMCS1), according to some embodiments of the present disclosure. FIG. 3B depicts construction of the cleaning fluid distribution network 136 mounted on the base frame for cleaning the flat surface and the inclined surface during the second mode of operation (UPAMCS2), according to some embodiments of the present disclosure.

As depicted in the 3-D view of FIGS. 3A and 3B, the inclined surface cleaning mechanism comprises the plurality of X-type cleaning fluid tanks 504 (elevated with head difference) and a plurality of Y-type nozzles 506 (in line with plane of inclined surface to be cleaned), which are electrically activated using the electrical nozzle actuation system 142A-B on receiving signals from the proximity sensors 144A-B and the vision cameras 138A-D. Once the Y-type nozzles 506 that are placed parallel to the inclined plane of the surface to be cleaned are activated, the cleaning fluid is sprayed via the piping network 508 to clean the inclined surface using one or more cylindrical surface cleaning rollers 502. The cylindrical surface cleaning rollers 502 are a single unit in FIG. 3A for single mopping system for the first mode UPAMCS1, while the FIG. 3B depicts a split design for dual mopping system aligned in front of each mopping system 132A-B.

As depicted in FIGS. 3A and 3B, the flat surface cleaning mechanism comprises a plurality of A-type cleaning fluid tanks 512 (at base frame level with head difference) and a plurality of B-type nozzles 514 (directed downwards towards flat surface to be cleaned), which are electrically activated using the electrical nozzle actuation system 142A-B on receiving signals from the proximity sensors 144A-B and the vision cameras 138A-D. Once the B-type nozzles (514) that face towards the mopping system facing the surface to be cleaned are activated, the cleaning fluid is sprayed via the piping network 510 to clean the flat surface using one or more cylindrical surface cleaning rollers 502 and the one or more mopping systems 124A-B. The flow of the cleaning fluid is ensured by placing the cleaning fluid tanks to allow gravity flow.

**UPAMCS operation:** The UAV 106 is equipped with landing and take-off configurations, wherein the UAV-MIM 102 allows the UAV 106 to land and take-off vertically. A drive configuration of the UPAMCS 100 activated after landing on the surface enables utilizing a propulsive power of the UAV 106 to maximum for pushing the pair of driving wheel 112 and the driven wheels 114A-C using friction, wherein the pair of driving wheels 112 at the rear end of the base frame 104, and the driven wheels 114A-C attached to each of a front end, a Left Hand Side (LHS) and a Right Hand Side (RHS) of the base frame 104 push the UPAMCS 100 forward over the surface to be cleaned. The cleaning fluid distribution network 136 is activated as soon as the UPAMCS 100 lands and drives forward, spraying the cleaning fluid on the surface enabling the mopping system 124A-B to cleanse. One or more cylindrical surface cleaning rollers 502 installed in the front of the base frame 104 and supported at (i) the LHS, a middle side and the RHS of the UPAMCS base frame 104 for a two cylindrical surface cleaning rollers configuration, and (ii) at the LHS and the RHS for a single cylindrical surface cleaning roller configuration. The brushes are free to rotate about central axles. The electrical nozzle activation system 142A-B and the proximity sensor 144A-B can be controlled via on-board processing by the UAV 106 in accordance with the current UPAMCS configuration.

FIG. 2H illustrates a visual based navigation system enabled by LiDARS 140A-D and one or more vision cameras 138A-D, each placed each end of the of the base frame 104. The visual information and LiDAR points captured by a visual based navigation system can be processed on-board by the UAV 106 enabling automatically and dynamically monitoring and tracking of the action of UPAMCS 100 over the surface to be cleaned. This also enables inspection of the surface. The processed information can be communicated to a central processing unit by the UAV 106 for further action to be initiated such as triggering damage alert, notifying cleaning task initiation or completion and so on to a remote administrator In an embodiment, additional tactile or pressure sensors may be implemented for controlling the impact of the system (100) while landing, moving or in contact with surface to be cleaned, specifically for impact sensitive surfaces such as solar panels. In an embodiment the system may be equipped with a single LiDAR and placed at any one of the front end, rear end, LHS and RHS of the base frame 104, such that the single LiDAR provides the necessary views for navigation and control.

The mopping system 124 works under three configurations comprising:
a) The lifting configuration (as depicted in FIGS. 1A and 1B), wherein the UAV-MIM mounting 108A-D is at 90 degree with UPAMCS base frame 104 making it feasible for the mopping system 124A-B to be lifted during positioning (landing) and take-off.
b) A normal operating configuration (as depicted in FIGS. 4A and 5A), wherein the pair of driving wheels 112 and the driven wheels 114A-C are moved by friction as a push from the UAV (106) when the UAV (106) propels in a specific direction.
c) A steering configuration (as depicted in FIGS. 4B and 5B), wherein rotation of the pair of driving wheels 112 in turn starts rotating the worm 116A and the worm wheel 116B mechanism which has a drive shaft attached over, the drive shaft in turn rotates the driver pulley 118, wherein the rotation is transmitted to the driven pulley 122A-B through the driven pulley belts 120A-B. The driven pulley 122A-B transmits the rotation to drive arms 126A-B that is passed through the UPAMCS base frame 104. The drive arms 126A-B transmit the rotation to the set of planet gear wheels 132A-B attached to the drive arms 126A-B, wherein the set of planet gear wheels 132A-B are meshed to the inner teeth of the annular gear wheel 130A-B and the sun gear wheel 128A-B for movement of the mopping material 134 for cleaning the surface.

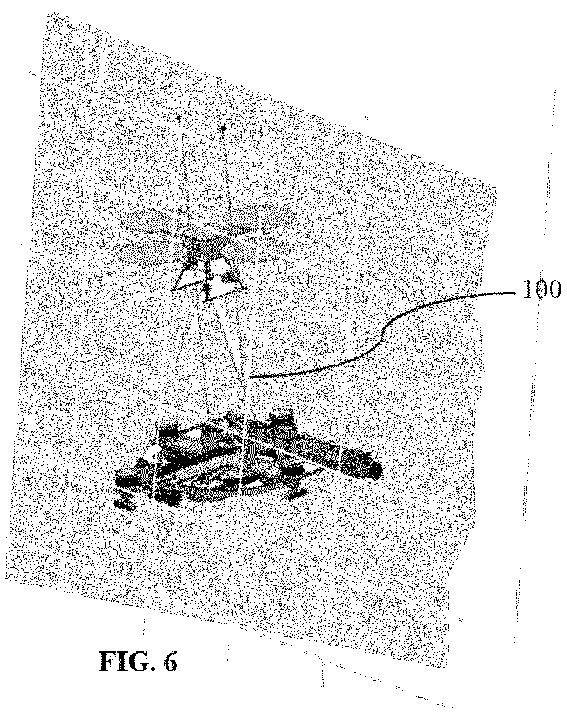

FIG. 6 is a schematic depicting inclined surface cleaning mechanism by maintaining with the UAV in the lift configuration, wherein the system 100 moves up and down with the cylindrical surface cleaning rollers 502 pressing against the inclined surface such as a windowpane.

Provided below is an illustrative 'cleaning time' calculation of the system 100.
**Nomenclature and specification of an example** system **100 considered** is as **below:**
   Driving wheel = dw: Dia = Ddw = 78.5 mm
   Worm gear = wg; No of teeth Twg = 20
   Worm = w; No. of starts of thread Nst = 2
   Driven pulley =dp; Driven pulley speed = Ndp
   Epicyclic arm =a; Arm speed = Na
   Planet gear = p; No of teeth = Tp = 75; module = 2
   Sun gear = s; No of teeth = Ts = 150; module = 2
**Design calculation for Solar Pond** (SP) **cleaning:**
   a) System speed= Vdw = 3.6 m/s (Drone is assumed to provide)
   b) Driving wheel speed = Ndw = Vdw/(Ddw/2*2*Π/60) = 876 rpm
   c) Worm gear speed = Nwg = Ndw = 876 rpm
   d) Worm speed = Nw = (Twg/Nst) * Nwg = 87.6 rpm ≈ 88 rpm
   e) Planet gear speed = Np = Na = Ndp = Nw = 88 rpm
   f) Sun gear speed = Ns = Np * Tp/Ts = 44 rpm
   g) Cleaning time for SP:
      i. SP diameter = Dsp = 50 m
      ii. SP surface area = Asp = Π/4 * Dsp^2 =Π/4 * 50*50 m^2
      iii. Mopping wheel (MW) dia = Dmw = 0.6 m
      iv. MW area = Amw = Π/4 * Dmw^2 = Π/4 * 0.6*0.6 m^2
      v. Mopping system area = Ams =2*Amw = 2 * Π/4*0.6*0.6 m^2
      vi. No. of Dmw moved in 1 sec = Vdw/Dmw = 3.6/0.6 = 6
      vii. Area cleaned per sec = 6*Ams = 6 * 2 * Π/4 * 0.6*0.6 m^2
      viii. SP cleaning time= Asp/(6*Ams) = 578.7 s = 9 min 37 s
   h) As per the above calculation the system 100 can clean the 50 m diameter solar plant in 9 min 37 s.

The written description describes the subject matter herein to enable any person skilled in the art to make and use the embodiments. The scope of the subject matter embodiments is defined by the claims.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. An Unmanned Aerial Vehicle (UAV) Propelled Autonomous Multiplane Cleaning System (UPAMCS) (100), comprising:
a UAV (106), a UAV and Mopping Interface Mechanism (UAV-MIM) (102), a base frame (104), and mopping systems (124A-B), wherein the UAV-MIM (102) is mounted on the base frame (104) of the UPAMCS connecting to the UAV (106) as a slung load, wherein the UAV (106) lifts the base frame (104) mounted with mopping systems (124A-B) via the UAV-MIM (102);
a driving wheel frame (110) connected to a rear end of the base frame (104);
a pair of driving wheels (112) attached to a lower side of the driving wheel frame (110) at the rear end, a worm (116A) and a worm wheel (116B), wherein the worm wheel (116B) is attached to a driver wheel axle of the pair of driving wheels (112), which in turn drives the worm (116A) about a vertical axis;
a driver pulley (118) fixed at a top end of the worm (116A), wherein one or more driven pulley belts (120A-B) transmit drive from the driver pulley (118) to one or more driven pulleys (122A-B) connecting one or more mopping systems (124A-B),
each mopping system (124A) comprising:
a set of drive arms (126A) driven by the driven pulley (122A) attached;
an annular gear wheel (130A) fixed to the lower side of the base frame (104); and
a set of planet gear wheels (132A), each planet gear wheel from the set of planet gear wheels (132A) is connected to a drive arm among the set of drive arms (126A), wherein the set of planet gear wheels (132A) is meshed between fixed internal teeth of the annular gear wheel (130A) and a sun gear wheel (128A), wherein each of the drive arm rotates the set of planet gear wheels (132A) which in turn rotate the sun gear wheel (128A) and a mopping material (134) fixed to a bottom side of the sun gear wheel (128A) and the set of planet gear wheels (132A); and
a cleaning fluid distribution network (136) attached to the base frame (104) comprising (i) an inclined surface cleaning mechanism for spraying cleaning fluid in an upward direction and (ii) a flat surface cleaning mechanism for spraying the cleaning fluid in a downward direction for a surface to be cleaned below the one or more mopping systems (124A-B).

2. The UPAMCS (100) as claimed in claim 1, wherein the inclined surface cleaning mechanism comprises a plurality of X-type cleaning fluid tanks (504) and a plurality of Y-type nozzles (506), which are electrically actuated via an electrical nozzle actuation system (142A-B) of the UPAMCS (100) for spraying the cleaning fluid to clean an inclined surface using one or more cylindrical surface cleaning rollers (502) of the UPAMCS (100).

3. The UPAMCS (100) as claimed in claim 1, wherein the flat surface cleaning mechanism comprises a plurality of A-type cleaning fluid tanks (512) and a plurality of B-type nozzles (514), which are electrically activated via the electrical nozzle actuation system (142A-B) of the UPAMCS (100) for spraying the cleaning fluid to clean a flat surface using the one or more cylindrical surface cleaning rollers (502) of the UPAMCS (100) and the one or more mopping systems (124A-B).

4. The UPAMCS (100) as claimed in claim 1, wherein the UAV (106) is equipped with landing and take-off configurations, and wherein the UAV-MIM (102) allows the UAV (106) to land and take-off vertically.

5. The UPAMCS (100) as claimed in claim 4, wherein the UPAMCS (100) operates in a first mode (UPAMCS 1) with a single mopping system and a second mode (UPAMCS2) with a dual mopping system, wherein the cylindrical surface cleaning rollers (502) are a single unit for for the single mopping system of said first mode (UPAMACS 1) and the cylindrical surface cleaning rollers (502) are a split design for the dual mopping system of said second mode (UPAMACS 2) .

6. The UPAMCS (100) as claimed in claim 4, wherein
a drive configuration of the UPAMCS (100) activated after landing on the surface enables utilizing a propulsive power of the UAV (106) to maximum for a pair of driving wheel (112) and driven wheels (114A-C) using friction to push the UPAMCS (100) forward over the surface to be cleaned, wherein the drive configuration of the UPAMCS (100) comprises the pair of driving wheel (112) and the driven wheels (114A-C), wherein the pair of driving wheels (112) are attached at the rear end of the base frame (104), and the driven wheels (114A-C) are attached to each of a front end, a Left Hand Side (LHS) and a Right Hand Side (RHS) of the base frame (104);
the cleaning fluid distribution network (136) is activated when the UPAMCS (100) lands and drives forward, spraying the cleaning fluid on the surface enabling the mopping system (124A-B) to cleanse, and
one or more cylindrical surface cleaning rollers (502) installed in the front of the base frame (104) and supported at (i) the LHS, a middle side and the RHS of the base frame (104) for a two cylindrical surface cleaning rollers configuration, and (ii) at the LHS and the RHS for a single cylindrical surface cleaning roller configuration, wherein the brushes are configured to freely rotate about central axles.

7. The UPAMCS (100) as claimed in claim 1, comprises a visual based navigation system enabled by one or more LiDARS (140A-D), and one or more vision cameras (138A-D) placed at the front end, the rear end, the LHS and the RHS of the base frame (104).

8. The UPAMCS (100) as claimed in claim 1, wherein the mopping system (124A-B) is operated with a plurality of configurations comprising:
a lifting configuration, wherein a UAV-MIM mounting (108A-D) is at 90 degree with the base frame (104) enabling the mopping system (124A-B) to be lifted during landing and take-off, wherein the mopping system (124A-B) moves up and down with cylindrical surface cleaning rollers (502) pressing against inclined surface;
a normal operating configuration, wherein in the normal operating configuration the pair of driving wheels (112) and the driven wheels (114A-C) are moved by friction as a push from the UAV (106) when the UAV (106) propels in a specific direction, wherein the normal operating configuration operates in first mode (UPAMCS1) with a single mopping system and a second mode (UPAMCS2) with a dual mopping system, wherein the cylindrical surface cleaning rollers (502) are a single unit for single mopping system of said first mode (UPAMCS1) and the cylindrical surface cleaning rollers (502) are a split design for dual mopping system of said second mode (UPAMCS2);
a steering configuration, wherein the UPAMCS (100) is steered by a steering mechanism of the steering configuration placed at the driving wheel frame (110), wherein in the steering configuration rotation of the pair of driving wheels (112) in turn starts rotating the worm (116A) and the worm wheel (116B) which has a drive shaft attached over, the drive shaft in turn rotates the driver pulley (118), and wherein the rotation is transmitted to the driven pulley (122A-B) through the one or more driven pulley belts (120A-B);
the driven pulley (122A-B) transmits the rotation to the set of drive arms (126A-B) that is passed through the base frame (104), wherein the set of drive arms (126A-B) transmit the rotation to the set of planet gear wheels (132A-B) attached to the set of drive arms (126A-B), wherein the set of planet gear wheels (132A-B) is meshed to the inner teeth of the annular gear wheel (130A-B) and the sun gear wheel (128A-B) for movement of the mopping material (134) for cleaning the surface.

## Patentansprüche

1. Unbemanntes, von einem Luftfahrzeug (UAV) angetriebenes autonomes Mehrebenenreinigungssystem (UPAMCS) (100), umfassend:
ein UAV (106), einen UAV- und Wischschnittstellenmechanismus (UAV-MIM) (102), einen Basisrahmen (104) und Wischsysteme (124A-B), wobei der UAV-MIM (102) an dem Basisrahmen (104) des UPAMCS montiert ist, der mit dem UAV (106) als eine geschleppte Last verbunden ist, wobei das UAV (106) den Basisrahmen (104), der mit Wischsystemen (124A-B) montiert ist, über den UAV-MIM (102) anhebt;
einen Antriebsradrahmen (110), der mit einem hinteren Ende des Basisrahmens (104) verbunden ist;
ein Paar von Antriebsrädern (112), die an einer unteren Seite des Antriebsradrahmens (110) an dem hinteren Ende angebracht sind, eine Schnecke (116A) und ein Schneckenrad (116B), wobei das Schneckenrad (116B) an einer Antriebsradachse des Paars von Antriebsrädern (112) angebracht ist, die wiederum die Schnecke (116A) um eine vertikale Achse antreibt;
eine Antriebsriemenscheibe (118), die an einem oberen Ende der Schnecke (116A) befestigt ist, wobei ein oder mehrere angetriebene Riemenscheibenriemen (120A-B) Antrieb von der Antriebsriemenscheibe (118) auf eine oder mehrere angetriebene Riemenscheiben (122A-B) übertragen, die ein oder mehrere Wischsysteme (124A-B) verbinden,
wobei jedes Wischsystem (124A) umfasst:
einen Satz von Antriebsarmen (126A), die durch die angebrachte angetriebene Riemenscheibe (122A) angetrieben werden;
ein ringförmiges Zahnrad (130A), das an der unteren Seite des Basisrahmens (104) befestigt ist; und
einen Satz von Planetenrädern (132A), wobei jedes Planetenrad aus dem Satz von Planetenrädern (132A) mit einem Antriebsarm aus dem Satz von Antriebsarmen (126A) verbunden ist, wobei der Satz von Planetenrädern (132A) zwischen festen Innenzähnen des ringförmigen Zahnrads (130A) und einem Sonnenrad (128A) in Eingriff steht, wobei jeder der Antriebsarme den Satz von Planetenrädern (132A) dreht, die wiederum das Sonnenrad (128A) und ein Wischmaterial (134) drehen, das an einer Unterseite des Sonnenrads (128A) und des Satzes von Planetenrädern (132A) befestigt ist; und
ein Reinigungsfluidverteilungsnetzwerk (136), das an dem Basisrahmen (104) angebracht ist, umfassend (i) einen Reinigungsmechanismus für geneigte Oberflächen zum Sprühen von Reinigungsfluid in einer Aufwärtsrichtung und (ii) einen Reinigungsmechanismus für flache Oberflächen zum Sprühen des Reinigungsfluids in einer Abwärtsrichtung für eine zu reinigende Oberfläche unter dem einen oder den mehreren Wischsystemen (124A-B).

2. UPAMCS (100) nach Anspruch 1, wobei der Reinigungsmechanismus für geneigte Oberflächen eine Mehrzahl von X-Typ-Reinigungsfluidtanks (504) und eine Mehrzahl von Y-Typ-Düsen (506) umfasst, die über ein elektrisches Düsenbetätigungssystem (142A-B) des UPAMCS (100) zum Sprühen des Reinigungsfluids zum Reinigen einer geneigten Oberfläche unter Verwendung einer oder mehrerer zylindrischer Oberflächenreinigungswalzen (502) des UPAMCS (100) elektrisch betätigt werden.

3. UPAMCS (100) nach Anspruch 1, wobei der Reinigungsmechanismus für flache Oberflächen eine Mehrzahl von A-Typ-Reinigungsfluidtanks (512) und eine Mehrzahl von B-Typ-Düsen (514) umfasst, die über das elektrische Düsenbetätigungssystem (142A-B) des UPAMCS (100) zum Sprühen des Reinigungsfluids zum Reinigen einer flachen Oberfläche unter Verwendung der einen oder der mehreren zylindrischen Oberflächenreinigungswalzen (502) des UPAMCS (100) und des einen oder der mehreren Wischsysteme (124A-B) elektrisch aktiviert werden.

4. UPAMCS (100) nach Anspruch 1, wobei das UAV (106) mit Lande- und Startkonfigurationen ausgestattet ist und wobei der UAV-MIM (102) dem UAV (106) ermöglicht, vertikal zu landen und zu starten.

5. UPAMCS (100) nach Anspruch 4, wobei das UPAMCS (100) in einem ersten Modus (UPAMCS1) mit einem einzelnen Wischsystem und einem zweiten Modus (UPAMCS2) mit einem Doppelwischsystem arbeitet, wobei die zylindrischen Oberflächenreinigungswalzen (502) eine einzelne Einheit für das einzelne Wischsystem des ersten Modus (UPAMCS 1) sind und die zylindrischen Oberflächenreinigungswalzen (502) eine geteilte Konstruktion für das Doppelwischsystem des zweiten Modus (UPAMCS 2) sind.

6. UPAMCS (100) nach Anspruch 4, wobei
eine Antriebskonfiguration des UPAMCS (100), die nach dem Landen auf der Oberfläche aktiviert wird, es ermöglicht, eine Vortriebsleistung des UAV (106) für ein Paar von Antriebsrädern (112) und angetriebenen Rädern (114A-C) unter Verwendung von Reibung zu maximieren, um das UPAMCS (100) nach vorne über die zu reinigende Oberfläche zu schieben, wobei die Antriebskonfiguration des UPAMCS (100) das Paar von Antriebsrädern (112) und die angetriebenen Räder (114A-C) umfasst, wobei das Paar von Antriebsrädern (112) am hinteren Ende des Basisrahmens (104) angebracht ist und die angetriebenen Räder (114A-C) jeweils an einem vorderen Ende, einer linken Seite (LHS) und einer rechten Seite (RHS) des Basisrahmens (104) angebracht sind;
das Reinigungsfluidverteilungsnetzwerk (136) aktiviert wird, wenn das UPAMCS (100) landet und nach vorne fährt, wobei das Sprühen des Reinigungsfluids auf die Oberfläche es dem Wischsystem (124A-B) ermöglicht, zu reinigen, und
eine oder mehrere zylindrische Oberflächenreinigungswalzen (502), die in der Vorderseite des Basisrahmens (104) installiert sind und an (i) der LHS, einer mittleren Seite und der RHS des Basisrahmens (104) für eine Konfiguration mit zwei zylindrischen Oberflächenreinigungswalzen und (ii) an der LHS und der RHS für eine Konfiguration mit einer einzelnen zylindrischen Oberflächenreinigungswalze getragen werden, wobei die Bürsten konfiguriert sind, um sich frei um Mittelachsen zu drehen.

7. UPAMCS (100) nach Anspruch 1, umfassend ein visuelles Navigationssystem, das durch ein oder mehrere LiDARS (140A-D) ermöglicht wird, und eine oder mehrere Sichtkameras (138A-D), die am vorderen Ende, am hinteren Ende, der LHS und der RHS des Basisrahmens (104) platziert sind.

8. UPAMCS (100) nach Anspruch 1, wobei das Wischsystem (124A-B) mit einer Mehrzahl von Konfigurationen betrieben wird, umfassend:
eine Hebekonfiguration, wobei eine UAV-MIM-Montage (108A-D) 90 Grad mit dem Basisrahmen (104) ist, was es dem Wischsystem (124A-B) ermöglicht, während des Landens und Startens angehoben zu werden, wobei sich das Wischsystem (124A-B) mit zylindrischen Oberflächenreinigungswalzen (502), die gegen eine geneigte Oberfläche drücken, auf und ab bewegt;
eine Normalbetriebskonfiguration, wobei in der Normalbetriebskonfiguration das Paar von Antriebsrädern (112) und die angetriebenen Räder (114A-C) durch Reibung als ein Schub vom UAV (106) bewegt werden, wenn das UAV (106) in eine spezifische Richtung vorrückt, wobei die Normalbetriebskonfiguration in einem ersten Modus (UPAMCS1) mit einem einzelnen Wischsystem und einem zweiten Modus (UPAMCS2) mit einem Doppelwischsystem arbeitet, wobei die zylindrischen Oberflächenreinigungswalzen (502) eine einzelne Einheit für das einzelne Wischsystem des ersten Modus (UPAMCS1) sind und die zylindrischen Oberflächenreinigungswalzen (502) eine geteilte Konstruktion für das Doppelwischsystem des zweiten Modus (UPAMCS2) sind;
eine Lenkkonfiguration, wobei das UPAMCS (100) durch einen Lenkmechanismus der Lenkkonfiguration gelenkt wird, der am Antriebsradrahmen (110) platziert ist, wobei in der Lenkkonfiguration die Drehung des Paars von Antriebsrädern (112) wiederum beginnt, die Schnecke (116A) und das Schneckenrad (116B) zu drehen, das eine darüber angebrachte Antriebswelle aufweist, wobei die Antriebswelle wiederum die Antriebsriemenscheibe (118) dreht, und wobei die Drehung auf die angetriebene Riemenscheibe (122A-B) durch den einen oder die mehreren angetriebenen Riemenscheibenriemen (120A-B) übertragen wird;
die angetriebene Riemenscheibe (122A-B) die Drehung auf den Satz von Antriebsarmen (126A-B) überträgt, der durch den Basisrahmen (104) geführt wird, wobei der Satz von Antriebsarmen (126A-B) die Drehung auf den Satz von Planetenrädern (132A-B) überträgt, der am Satz von Antriebsarmen (126A-B) angebracht ist, wobei der Satz von Planetenrädern (132A-B) mit den Innenzähnen des ringförmigen Zahnrads (130A-B) und des Sonnenrads (128AB) zur Bewegung des Wischmaterials (134) zum Reinigen der Oberfläche in Eingriff steht.

## Revendications

1. Système de nettoyage multiplan autonome propulsé par véhicule aérien sans pilote (UAV) (UPAMCS) (100), comprenant :
un UAV (106), un UAV et un mécanisme d'interface d'essuyage (UAV-MIM) (102), un châssis de base (104), et des systèmes d'essuyage (124A-B), dans lequel l'UAV-MIM (102) est monté sur le châssis de base (104) de l'UPAMCS se raccordant à l'UAV (106) en tant que charge suspendue, dans lequel l'UAV (106) soulève le châssis de base (104) monté avec des systèmes d'essuyage (124A-B) via l'UAV-MIM (102) ;
un châssis de roue d'entraînement (110) raccordé à une extrémité arrière du châssis de base (104) ;
une paire de roues d'entraînement (112) fixées à un côté inférieur du châssis de roue d'entraînement (110) au niveau de l'extrémité arrière, une vis sans fin (116A) et une roue à vis sans fin (116B), dans lequel la roue à vis sans fin (116B) est fixée à un essieu de roue d'entraînement de la paire de roues d'entraînement (112), qui à son tour entraîne la vis sans fin (116A) autour d'un axe vertical ;
une poulie d'entraînement (118) fixée au niveau d'une extrémité supérieure de la vis sans fin (116A), dans lequel une ou plusieurs courroies de poulie entraînées (120A-B) transmettent un entraînement de la poulie d'entraînement (118) à une ou plusieurs poulies entraînées (122A-B) raccordant un ou plusieurs systèmes d'essuyage (124A-B),
chaque système d'essuyage (124A) comprenant :
un ensemble de bras d'entraînement (126A) entraînés par la poulie entraînée (122A) fixée ;
une roue dentée annulaire (130A) fixée au côté inférieur du châssis de base (104) ; et
un ensemble de roues dentées planétaires (132A), chaque roue dentée planétaire de l'ensemble de roues dentées planétaires (132A) est raccordée à un bras d'entraînement parmi l'ensemble de bras d'entraînement (126A), dans lequel l'ensemble de roues dentées planétaires (132A) est engrené entre des dents internes fixes de la roue dentée annulaire (130A) et une roue dentée solaire (128A), dans lequel chacun des bras d'entraînement fait tourner l'ensemble de roues dentées planétaires (132A) qui à leur tour font tourner la roue dentée solaire (128A) et un matériau d'essuyage (134) fixé à un côté inférieur de la roue dentée solaire (128A) et l'ensemble de roues dentées planétaires (132A) ; et
un réseau de distribution de fluide de nettoyage (136) fixé au châssis de base (104) comprenant (i) un mécanisme de nettoyage de surface inclinée pour pulvériser un fluide de nettoyage dans une direction vers le haut et (ii) un mécanisme de nettoyage de surface plate pour pulvériser le fluide de nettoyage dans une direction vers le bas pour une surface à nettoyer sous les un ou plusieurs systèmes d'essuyage (124A-B).

2. UPAMCS (100) selon la revendication 1, dans lequel le mécanisme de nettoyage de surface inclinée comprend une pluralité de réservoirs de fluide de nettoyage de type X (504) et une pluralité de buses de type Y (506), qui sont actionnées électriquement via un système d'actionnement de buse électrique (142A-B) de l'UPAMCS (100) pour pulvériser le fluide de nettoyage pour nettoyer une surface inclinée en utilisant un ou plusieurs rouleaux de nettoyage de surface cylindriques (502) de l'UPAMCS (100).

3. UPAMCS (100) selon la revendication 1, dans lequel le mécanisme de nettoyage de surface plate comprend une pluralité de réservoirs de fluide de nettoyage de type A (512) et une pluralité de buses de type B (514), qui sont activées électriquement via le système d'actionnement de buse électrique (142A-B) de l'UPAMCS (100) pour pulvériser le fluide de nettoyage pour nettoyer une surface plate en utilisant les un ou plusieurs rouleaux de nettoyage de surface cylindriques (502) de l'UPAMCS (100) et les un ou plusieurs systèmes d'essuyage (124A-B).

4. UPAMCS (100) selon la revendication 1, dans lequel l'UAV (106) est équipé de configurations d'atterrissage et de décollage, et dans lequel l'UAV-MIM (102) permet à l'UAV (106) d'atterrir et de décoller verticalement.

5. UPAMCS (100) selon la revendication 4, dans lequel l'UPAMCS (100) fonctionne dans un premier mode (UPAMCS1) avec un système d'essuyage unique et un second mode (UPAMCS2) avec un système d'essuyage double, dans lequel les rouleaux de nettoyage de surface cylindriques (502) sont une unité unique pour le système d'essuyage unique dudit premier mode (UPAMCS 1) et les rouleaux de nettoyage de surface cylindriques (502) sont une conception divisée pour le système d'essuyage double dudit second mode (UPAMCS 2).

6. UPAMCS (100) selon la revendication 4, dans lequel
une configuration d'entraînement de l'UPAMCS (100) activée après l'atterrissage sur la surface permet d'utiliser une puissance de propulsion de l'UAV (106) au maximum pour une paire de roues d'entraînement (112) et de roues entraînées (114A-C) en utilisant la friction pour pousser l'UPAMCS (100) vers l'avant sur la surface à nettoyer, dans lequel la configuration d'entraînement de l'UPAMCS (100) comprend la paire de roues d'entraînement (112) et les roues entraînées (114A-C), dans lequel la paire de roues d'entraînement (112) sont fixées à l'extrémité arrière du châssis de base (104), et les roues entraînées (114A-C) sont fixées à chacune d'une extrémité avant, d'un côté gauche (LHS) et d'un côté droit (RHS) du châssis de base (104) ;
le réseau de distribution de fluide de nettoyage (136) est activé lorsque l'UPAMCS (100) atterrit et se déplace vers l'avant, pulvérisant le fluide de nettoyage sur la surface permettant au système d'essuyage (124A-B) de nettoyer, et
un ou plusieurs rouleaux de nettoyage de surface cylindriques (502) installés à l'avant du châssis de base (104) et supportés au niveau (i) du LHS, d'un côté médian et du RHS du châssis de base (104) pour une configuration de deux rouleaux de nettoyage de surface cylindriques, et (ii) au niveau du LHS et du RHS pour une configuration de rouleau de nettoyage de surface cylindrique unique, dans lequel les brosses sont configurées pour tourner librement autour d'essieux centraux.

7. UPAMCS (100) selon la revendication 1, comprend un système de navigation à base visuelle activé par un ou plusieurs systèmes LiDAR (140A-D), et une ou plusieurs caméras de vision (138A-D) placées au niveau de l'extrémité avant, de l'extrémité arrière, du LHS et du RHS du châssis de base (104).

8. UPAMCS (100) selon la revendication 1, dans lequel le système d'essuyage (124A-B) fonctionne avec une pluralité de configurations comprenant :
une configuration de levage, dans laquelle un montage d'UAV-MIM (108A-D) est à 90 degrés avec le châssis de base (104) permettant au système d'essuyage (124A-B) d'être soulevé pendant l'atterrissage et le décollage, dans lequel le système d'essuyage (124A-B) se déplace vers le haut et vers le bas avec des rouleaux de nettoyage de surface cylindriques (502) pressant contre une surface inclinée ;
une configuration de fonctionnement normal, dans lequel, dans la configuration de fonctionnement normal, la paire de roues motrices (112) et les roues entraînées (114A-C) sont déplacées par friction en tant que poussée depuis l'UAV (106) lorsque l'UAV (106) avance dans une direction spécifique, dans lequel la configuration de fonctionnement normal fonctionne dans un premier mode (UPAMCS1) avec un système d'essuyage unique et un second mode (UPAMCS2) avec un système d'essuyage double, dans lequel les rouleaux de nettoyage de surface cylindriques (502) sont une unité unique pour un système d'essuyage unique dudit premier mode (UPAMCS 1) et les rouleaux de nettoyage de surface cylindriques (502) sont une conception divisée pour un système d'essuyage double dudit second mode (UPAMCS2) ;
une configuration de direction, dans lequel l'UPAMCS (100) est dirigé par un mécanisme de direction de la configuration de direction placé au niveau du châssis de roue d'entraînement (110), dans lequel, dans la configuration de direction, une rotation de la paire de roues d'entraînement (112) à son tour commence à faire tourner la vis sans fin (116A) et la roue à vis sans fin (116B) qui a un arbre d'entraînement fixé sur celle-ci, l'arbre d'entraînement à son tour fait tourner la poulie d'entraînement (118), et dans lequel la rotation est transmise à la poulie entraînée (122A-B) par l'intermédiaire des une ou plusieurs courroies de poulie entraînées (120A-B) ;
la poulie entraînée (122A-B) transmet la rotation à l'ensemble de bras d'entraînement (126A-B) qui est passé à travers le châssis de base (104), dans lequel l'ensemble de bras d'entraînement (126A-B) transmet la rotation à l'ensemble de roues dentées planétaires (132A-B) fixé à l'ensemble de bras d'entraînement (126A-B), dans lequel l'ensemble de roues dentées planétaires (132A-B) est engrené avec les dents internes de la roue dentée annulaire (130A-B) et la roue dentée solaire (128A-B) pour un déplacement du matériau d'essuyage (134) pour nettoyer la surface.
